# EUROPEAN PATENT SPECIFICATION

(11) **EP 1 785 043 B1**
(45) Date of publication and mention of the grant of the patent: **08.04.2009**
(21) Application number: 05300923.9
(22) Date of filing: 15.11.2005
(51) Int. Cl.: A23L 3/36, A23B 4/06, A23B 7/04, F25D 3/11

(54) **Process and device for cooling food articles**
Verfahren und Gerät zur Kühlung von Lebensmitteln
Procédé et appareil de refroidissement d'aliments

(43) Date of publication of application: 16.05.2007
(73) Proprietor: L'AIR LIQUIDE, Société Anonyme pour l'Etude et l'Exploitation des Procédés Georges Claude, 75007 Paris (FR); Air Liquide Deutschland GmbH, 40235 Düsseldorf (DE)
(72) Inventor: Taylor, Robert, 1300 Wavre (BE)
(74) Representative: Mellul-Bendelac, Sylvie Lisette

(56) References cited:
- EP-A- 0 863 373
- FR-A- 2 613 900
- US-A- 5 363 658
- US-A- 5 454 232
- US-A- 5 857 352
- US-B1- 6 167 708

## Description

The invention concerns a process respectively an apparatus for cooling articles such as food, in particular meat, seafood, fruit or vegetables, wherein the articles are cooled within an inner space of a rotatable cylinder.

In the field of cooling of material, in particular food products such as meat, seafood, fruit or vegetables, processes are known in which liquid nitrogen or liquid carbon dioxide are used as powerful refrigerating agents. Usually such processes involve the spraying of liquid nitrogen onto the products to be cooled, or the product is at least partially immersed in liquid nitrogen. Meanwhile very large volumes of gaseous nitrogen are formed due to the phase transition from the liquid into the gaseous state while cooling the product. Liquid nitrogen may be stored at 2 to 3 bar, using pressure transfer of the liquid to spray it onto the product to be cooled; the liquid obtains its latent heat of vaporisation from the product to convert it to gas at -196°C and this gas also provides a substantial source of cold (1,04 kJ/kg/°C) for further product cooling. In a similar way liquid carbon dioxide may be injected into devices operating at atmospheric pressure in which case the carbon dioxide becomes a mixture of solid carbon dioxide snow and gaseous carbon dioxide.

According to EP 0 632 966 a food article is frozen by contacting the article with a surface of a porous support which is impregnated with a cryogenic liquid, wherein the porous support may be formed as conveyor belt which is insulated by means of an enclosure.

It is known to use Archimedean screws for cooling of particular materials such as for cooling and freezing diced meat, seafood, fruit or vegetables, wherein the material is initially crust frozen by some means of contact with liquid nitrogen or a combination of solid and gaseous carbon dioxide generated by the depressurisation of liquid carbon dioxide so that the material becomes sufficiently stable to be removed by means of an Archimedean screw. It is advantageous (i) to effect as much heat transfer from the product to the gaseous nitrogen or carbon dioxide as possible, (ii) to introduce as little mechanical energy as possible, and (iii) to accept as little thermal losses as possible in order to achieve a high working efficiency.

Systems using screw shaped elements rotating in a immobile tube or in a "U"-shaped trough are limited in their application as the product is pushed along the fixed tube, or respectively trough, such that the relative movement of the screw shaped elements and the tube, or respectively trough bear the risk of damaging the machinery and/or the product. Open trough constructions have the advantage of an easy access for simple cleaning. Closed screw designs have the inherent disadvantage to be hard to be cleaned. This is particularly disadvantageous for food use, which puts high demands on cleanness of the machinery and the product. Openable Archimedean screw structures may be engineered at small scale but larger units having more than 20 cm in diameter and more than 100 cm in length have proven to be unsatisfactory due to cleaning difficulties and/or ineffectiveness due to the differential thermal contraction when used at cryogenic temperature.

FR 2 613 900 relates to an Archimedes screw with a continuous thread wherein the ordinary metal trough of which has been replaced by a slightly stretched flexible polyester cloth such that the screw rubs against the cloth. The screw is brought into contact with the cloth by means of two rigid tubes slid into sheets on the cloth and elastic tensioners for exerting an even pressure over the screw.

For large capacity systems, rotating tubes (rotary freezer) are known that are inclined downwards from the product inlet. The product moves the slope downwards due to tumbling caused by the rotation while it is being cooled by the cooling medium. Such systems have the advantage of a gentle movement action of the product. For the case that these rotating tubes may be constructed with a comparatively large internal diameter of more than 0.5 m and with a comparatively small length of less than 5 m, they can be made to be easily cleaned. However, these constructions may cause the product residence time in the system to vary much as the product residence time in the tube is not well defined and may vary depending upon the tumbling properties of the material being cooled. As some product articles may tumble much faster to the exit than others, the respective cooling treatments may vary from one article to the other considerably. For this reason, individual articles are cooled differently, in particular the critical point of phase transition about the freezing point is not well defined such that the kind of ice crystals formed in the product differs from one article to the other, which causes the product homogeneity to vary. Moreover the heat capacity of the cold gas may not be efficiently used in such systems for cooling the product. In consequence, besides product homogeneity and product quality, the degree of thermodynamic efficiency is reduced.

The object of the present invention is to provide for a process respectively device for cooling articles such as food, in particular meat, seafood, fruit or vegetables, with which the articles may be cooled homogenously on a large scale with a high efficiency at a food grade standard.

This problem is solved by the process for cooling articles respectively by the device for cooling articles as defined in the independent claims. Advantageous embodiments and favourable developments, which can be applied individually or can be combined in any suitable manner, are subject of the respective depending claims.

According to the invention the process for cooling articles such as food, in particular meat, seafood, fruit or vegetables, wherein the articles are cooled within an inner space of a rotatable cylinder comprising a wall made of a flexible material and the articles being enclosed in the inner space at least partially, the flexible material is at least one of fabric, tissue and canvas, in particular woven, preferably made from polyester, polyamide (in particular aromatic polyamide such as produced under the trademarks Kevlar or Nomex), in particular nylon, polyurethane and/or polyolefin.

The flexible material may be the one as described in WO 93/14358.

By the use of the rotatable cylinder the articles simply tumble and move due to the force of gravity as the drum rotates and the articles thus travel along the rotatable cylinder with no risk of becoming trapped against or between elements of the construction that are moving relative to each other, this design is effecting a much gentler action for the articles reducing damage to the articles due to their movement. The rotatable cylinder may be a rotable drum.

The flexible material is preferably food grade, in particular is not toxic or harmful with regard to food articles for human consumption.

By means of the flexible material comparatively large rotatable cylinders may be constructed, e.g. drums having a diameter of more than 0.5 m and a length of more than 5 m, that are easy to be cleaned despite of their largeness. For cleaning purposes the flexible material may be removably fixed to the rotatable cylinder, thus may be cleaned separately. In operation the flexible material is fixed to the rotatable cylinder and rotates therewith.

The flexible material may be wrapped in segments or in full revolutions around the rotatable cylinder providing a highly effective outer wall. The flexible material may be designed to be light weight, easy to handle and easy to be cleaned even for food grade standards. It is advantageous to use woven polyester as it is capable of adsorbing and retaining a cooling medium such as liquid nitrogen. The flexible material may absorb and become impregnated with the cooling medium for providing a source of additional cooling to the articles by means of thermal contact of the articles with the flexible material as the articles tumble. For some applications it may be advantageous to include a specific spraying means for the cooling medium to the outside of the material in order to create an impregnation from outside.

The flexible material may be fixed to the rotatable cylinder, using a means that allows it to be easily removed, in particular by means of clamping, hooking, and/or clipping. The flexible material may be wrapped as one piece around the rotatable cylinder or may be fixed as patches onto the drum. The flexible material may also be fixed by screwing.

The articles may be cooled using a cryogenic liquid or a cryogenic solid. The cryogenic liquid may be liquid nitrogen or liquid carbon dioxide. The cryogenic solid may be carbon dioxide snow. Gaseous fluid may also be used for cooling. The gaseous or liquid respectively solid carbon dioxide may produced by depressurising liquid carbon dioxide.

The flexible material may be impregnated with the cryogenic liquid and heat transfer between the articles and the cryogenic liquid within the flexible material may be ensured. By impregnating the flexible material with cryogenic liquid and bringing the articles into contact with the flexible material, a close thermal contact between the articles and the cryogenic liquid is achieved without using a cooling bath such that a high cooling capacity is achieved without the need of providing for a bath container. For even higher cooling capacity at least a partial length of the cylinder may incorporate a liquid nitrogen immersion section.

The articles may be conveyed along a flow direction in the drum with a conveyor means, in particular may be conveyed along the flow direction using an Archimedian screw and/or a ribbon screw. The flexible material may be fixed to the conveyor means in the sense that the rotatable cylinder with the flexible material is fixed to the screw and rotates therewith. The articles may also be conveyed using individual screw segments such as paddles.

The articles may be conveyed upwards or downwards along a slope with an inclination with respect to the horizontal plane in the range of -45° to +45°, preferably in the range of 0° to +6°.

By means of using the conveyor means, an easy separation of the articles from a cooling bath at an inlet of the rotatable cylinder may be achieved. For example, the Archimedean screw comprises an inner shaft onto which a screw thread is formed. The ribbon screw may have an open cross section along the axis of rotation of the screw. The function of the ribbon screw may be mixing the articles, conveying the articles or both.

The articles may be mixed using mixing elements. The mixing elements help to reduce thermal inhomogeneities among the articles, which helps to provide for well defined cooling conditions for all articles.

Thermal problems arsing from incomplete mixing of the articles may be also overcome using one or more bars or blades fixed over some of the length of the screw, or by adding mixing blades to the screw element. The function of such devices is to lift articles from the bottom of a pocket of the Archimedean screw further up the side of the wall of the rotatable cylinder so that the articles fall to the top of the pocket such, that the articles are effectively mixed in the device as they are transported to the outlet, thus creating more even and effective cooling.

For articles that are not very porous the pockets of the screw may be filled approximately half to three quarter relative to the volume of material that would completely fill the pockets created by the screw. This helps to increase the velocity of gas flow. The velocity of the gas flow within the rotatable cylinder is in particular ranging from 2 m/sec to 20 m/sec, typically around 5m/sec. By means of such high flow velocities, the heat transfer from product to gas is observed to be two to four times higher than that achieved in the equivalent element of the "Rotary Freezer" described previously in the prior art. It may be advantageous to seal the cooling unit such that the gas evolving from the boiling cooling medium can exit the system only through the outlet of the rotatable cylinder respectively Archimedean screw. The cooled articles may be separated from the gaseous cooling medium using sieves or cyclone type separators, the separation being assisted by the use of a rotary valve to limit the gas exiting with the product. As the Archimedes screw is inherently a low energy demanding device, a typical unit will require a drive motor that is much less powerful than that required for a conveyor belt used in cryogenic tunnels of equivalent conveying capacity. By using a variable speed drive it is simple to adjust the speed to match the filling of the unit with the production and cooling capacities required.

The articles may be frozen at least partially. For example the device provides for freezing only an outer shell of the articles, the inside of the articles remaining above freezing point at least for the duration of their presence in the device.

According to the invention the device for cooling articles such as food, in particular meat, seafood, fruit or vegetables, comprises a rotatable cylinder having an inner space for receiving and cooling the articles, wherein the rotatable cylinder comprises a wall made of a flexible material and the articles are enclosed in the inner space at least partially, wherein the flexible material is at least one of fabric, tissue and canvas, in particular woven, preferably made from polyester, polyamide, in particular nylon, polyurethane and/or polyolefin.

The flexible material may be formed as sheets or patches or as integral part and may be attached to or wrapped around the rotatable cylinder. The flexible material may be fixed onto the circumference of the drum or may be fixed at the drum. The flexible material may be removably fixed to the rotatable cylinder in particular by means of clamping, hooking and/or clipping. For this purpose the drum respectively the flexible material may comprise clamps, hooks, clips, loops or screws.

The device may further comprise a cooling device for cooling the articles, in particular supplying means for supplying cryogenic liquid, in particular liquid nitrogen.

The flexible material may be advantageously porous and impregnatable with the cryogenic liquid. For this purpose the flexible material may be either woven, knitted or perforated. The flexible material may comprise a multiplicity of protrusions or brush shaped elements that are able to carry cryogenic liquid. The flexible material may be the one as defined in WO 93/14358. An impregnation of the flexible material with cryogenic liquid helps to increase the cooling capacity and cooling homogeneity of the articles.

The wall may comprise tubular sections, wherein the tubular sections are at least partially made of the flexible material.

The rotatable cylinder may comprise in its inner space conveyor means for conveying the articles along a flow direction. The conveying means may comprise an Archimedian screw and/or a ribbon screw, in particular with an inclination with respect to the horizontal plane in the range of -45° to +45°, preferably in the range of 0° to 6°. The inclination may be uphill or downhill, such that the articles are conveyed against gravity from a lower vertical position to a higher vertical position, or with gravity from a higher to lower position.

The device may comprise a cooling bath, in particular a cooling bath that may contain liquid nitrogen. By means of the conveyor means the articles may be taken out of the cooling bath and moved uphill such that the articles are separated from the cooling medium in the cooling bath. The rotatable cylinder may comprise an inlet port and an outlet port and the inlet port may be at least partially immersed in a cooling bath.

The conveyor means may comprise conveyor elements or mixing elements in particular paddles. The conveyor elements provide for a particularly uniform temperature distribution and thus provide for well defined cooling conditions which help to meet uniform product specifications.

The flexible material may be removably fixed at the drum, in particular by means of screws, clips and/or hooks and loops or by clamping. Screws, clips and/or hooks or loops respectively clamping helps to easily remove the flexible material for separate cleaning.

The device may further comprise at least one of the following features a1) to a5): (a1) the drum has a length ranging from 1 m to 10 m in particular ranging from 2 m to 6 m; (a2) the drum has a diameter (D) ranging from 0,4m to 3m, in particular ranging from 0.8 m to 2 m: (a3) the drum has a central shaft extending at least partially over the length (L) or the drum along the axis of rotation of the drum, the diameter (S) of the central shaft ranging from 10 % to 70 %, in particular ranging from 30 % to 50 %, of the diameter (D) of the drum; (a4) the flexible material has pores having average diameters ranging from 0,001 to 5 mm; (a5) the flexible material has a thickness (F) ranging from 0,5 mm to 5 mm, in particular ranging from 2 mm to 4 mm.

The device may further comprise a casing, in particular a casing with a thermal insulation preferably having openable lids, around the rotatable cylinder.

According to the invention, the articles, in particular chilled or frozen goods, in particular food such as meat, seafood, fruit or vegetables, is cooled with the process and/or cooled with the device according to the invention. Such articles profit from the easy cleanability of the device respectively the efficient and homogeneous cooling conditions under which they are cooled. Due to the efficient and homogenous cooling conditions, the goods meet high quality standards at high product homogeneity.

Further advantageous details and favourable aspects of the invention, which may be applied individually or may be combined with one another in every suitable way, will be explained in connection with the accompanying drawings, which shall not limit the scope of the invention but merely illustrate exemplarily the invention.

In the following, schematically,
- figures 1 to 4: show the device for cooling articles according to the invention in a perspective view;
- figures 5 to 8: show various (details of) embodiments of a screw of the device according to fig. 1 to 4 in a perspective view; and
- figure 9: shows a detail of device according to one of figures 1 to 4.

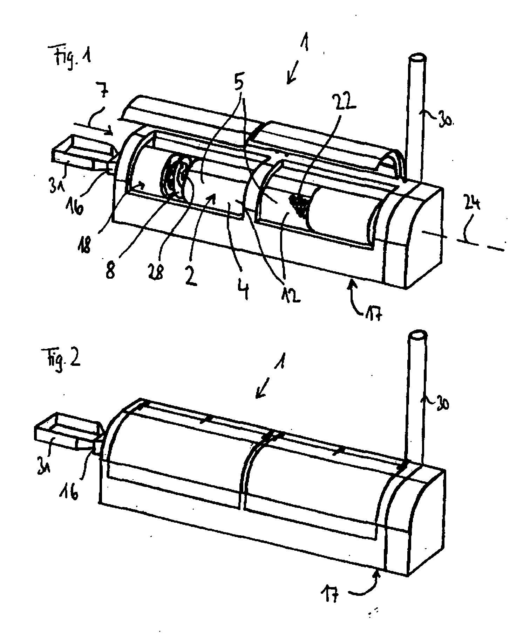

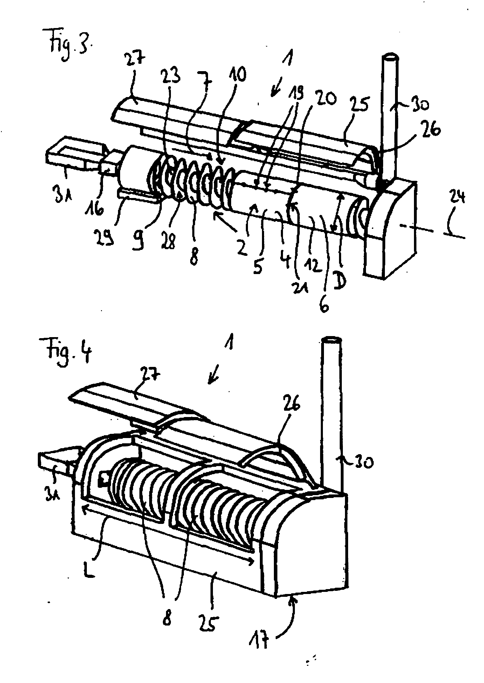

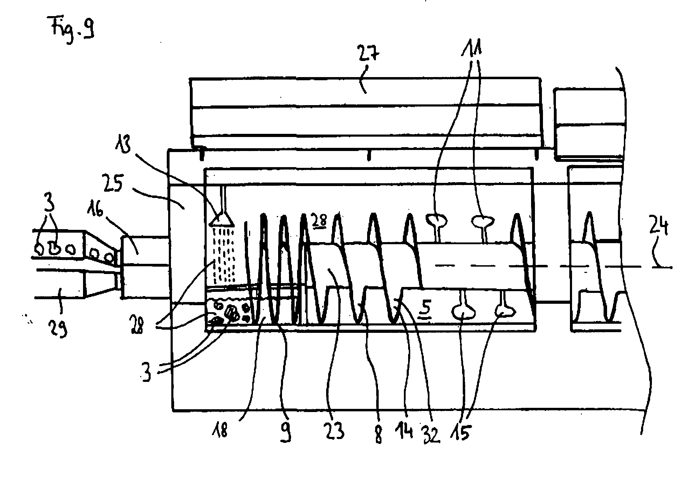

Figures 1 to 4 showing a device 1 for cooling articles 3 according the invention in a perspective view and fig. 9 showing a detail of the device according to one of figures 1 to 4 will described together.

The device 1 for cooling articles 3 comprises a rotatable cylinder 2 having tubular sections 1 made of a flexible material 4 such as woven polyester having a thickness of 2 mm. The tubular sections 12 form a wall 6 defining an inner space 5 in which the articles 3 are enclosed for cooling. The flexible material 4 forms the wall 6 such that the articles 3 are kept within the inner space 5 of the rotatable cylinder 2. Within the inner space 5 there is an Archimedian screw 8 which rotates together with the wall 6 and forms a conveyor means 10 with which the articles 3 are conveyed along a flow direction 7. The Archimedian screw 8 is tilted slightly with respect to the horizontal plane such that the articles 3 are moved uphill during operation of the Archimedian screw 8. The articles 3 are fed into an inlet port 16 of the rotating drum 2 by means of a vibrating trough 31. The articles 3 tumble down within each pocket of the Archimedean screw 8 due to gravity and are brought into contact with a cooling medium within the inner space 5 of the rotatable cylinder 2 such that they are cooled. The articles 3 are discharged through an outlet port 17 of the rotatable cylinder 2 for which purpose a rotary or "star" valve (not shown) is provided. The Archimedian screw 8 has an axis of rotation 24 which is tilted with respect to the horizontal plane. At the inlet port 16 of the rotatable cylinder 2 a cooling bath 18 is provided in which the articles 3 are immersed in a cryogenic liquid 28. The cryogenic liquid 28 is liquid nitrogen. The flexible material 4 comprises a multiplicity of pores 22 which are impregnated with the cryogenic liquid 28 such that the articles 3 are further cooled by thermal contact also in regions where the cooling bath 18 is not present. The pores 22 may be impregnated with cryogenic liquid 28 from the outside using spraying nozzles (not shown). Gas emerging from the cryogenic liquid 28 at the cooling bath 18 or from the pores 22 flows within the thread of the Archimedian screw 8 towards the outlet 17 of the Archimedean screw and may thus further cool the articles 3. The exhaust gas may exit through the exhaust 30. The device 1 comprises a casing 25 having a thermal insulation 26. The casing 26 may be closed using plural lids 27. The device 1 further comprises a cooling device 29 which provides for cryogenic liquid 28. The cooling device 29 may comprise supplying means 13 such as a spray header for feeding cryogenic liquid 28 to the cooling bath 18. The flexible material 4 may be fixed by means of screws 19, clips 20 or hooks and loops 21 to the rotatable cylinder 2. By means of these fasteners 19, 20, 21 the tubular sections 12 of the wall 6 may be easily removed for cleaning. The tubular sections 12 are easily cleaned in a washer (not shown) separately. Within the inner space 5 of the rotatable cylinder 2 there is a ribbon screw 9 which takes the articles 3 out of the cooling bath 18. The ribbon screw 9 and the Archimedian screw 8 represent conveyor elements 14 with which the articles 3 are conveyed along the flow direction 7. Paddles 15 further effect mixing of the articles 3 for achieving homogeneous cooling. The Archimedian screw 8 comprises a central shaft 23 such that gas resulting from vaporization of the cryogenic liquid 28 is forced to follow the threads of the Archimedian screw 8 between the central shaft 23 and the wall 6 such that the velocity of the gas flow is increased and the cooling capacity and efficiency are further increased. The threads 23 together with the wall 6 and the central shaft 23 define a gas channel for the vaporized cryogenic liquid 28 such that the gas is forced through the articles 3 even if the inner space 5 of the rotatable cylinder 2 is filled to more than 20 % with the articles 3. The gas velocity is about 5 m/sec. The inner space 5 is filled to approximately 40 % with the articles 3. The articles 3 are mixed within the inner space 5 by means of the mixing elements 11. The length L of the drum is 8 m, the diameter D of the drum is 1 m, the diameter S of the central shaft 23 is 0,6 m and the thickness of the flexible material 4 respectively of the wall 6 is 2 mm.

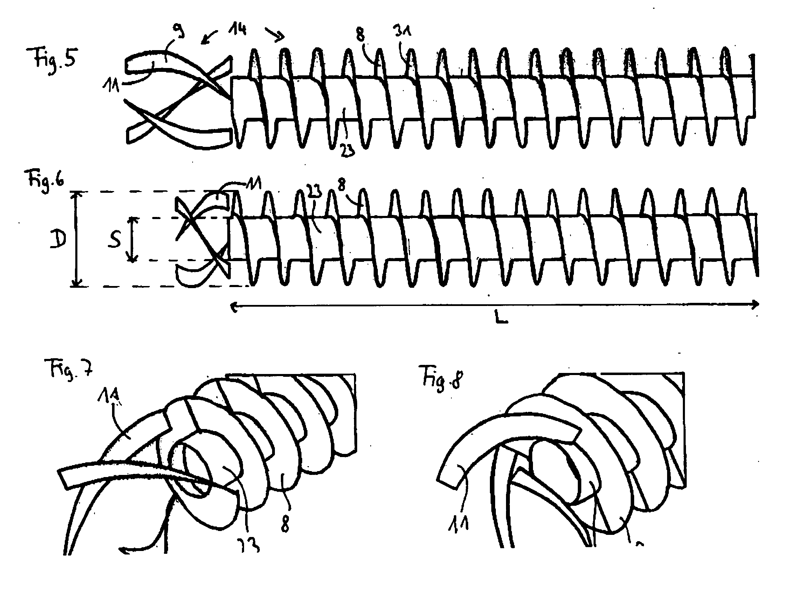

Figures 5 to 8 show perspective views of the Archimedian screw 8 according to figures 1 to 4 and 9. The Archimedian screw 8 comprises a central shaft 23 onto which the Archimedian threads 31 are formed. The Archimedian screw 8 rotates about the axis of rotation 24 defining the flow direction 7 of the articles 3. The Archimedian screw 8 is connected to a ribbon screw 9 which acts as mixing element 11 for mixing the articles 3 in the cooling bath 18. The ribbon screw 9 acts also as conveyor means 10 for conveying the articles 3 along the flow direction 7. The Archimedian screw 8 with the threads 31 and the central shaft 23 defines together with the wall 6 of the rotatable cylinder 2 a flow channel for the gas resulting from the vaporization of the cryogenic liquid 28 such that the relative velocity between the articles 3 and the gas is increased effecting an increased cooling efficiency.

The invention concerns a device and a process for cooling articles 3 such as food, in particular meat, seafood, fruit or vegetables, with a rotatable cylinder 2 having an inner space 5 for receiving and cooling the articles 3, wherein the rotatable cylinder 2 comprises a wall 6 made of a flexible material 4 and the articles 3 are enclosed in the inner space 5 at least partially, wherein the flexible material 4 is at least one of fabric, tissue and canvas, in particular woven, preferably made from polyester, polyamide, in particular nylon, polyurethane and/or polyolefin; as well as articles cooled with the process respectively the device according to the invention. The use of the flexible material allows for simple cleaning of the cooling device even if large rotatable cylinder 2 are involved that comprise an Archimedian screw 8 in their inner space 4, thus allowing for homogeneous, clean and efficient cooling of the articles 3. As cooling medium cryogenic liquid, in particular liquid nitrogen or liquid carbon dioxide, or cryogenic solid such as carbon dioxide snow may be used.

### Reference numerals

- 1: Device
- 2: drum
- 3: articles
- 4: material
- 5: space
- 6: wall
- 7: flow direction
- 8: Archimedean screw
- 9: ribbon screw
- 10: conveyor means
- 11: mixing elements
- 12: tubular sections
- 13: supplying means
- 14: conveyor elements
- 15: paddles
- 16: inlet port
- 17: outlet port
- 18: cooling bath
- 19: screw
- 20: clips
- 21: hooks and loops
- 22: pores
- 23: central shaft
- 24: axis of rotation
- 25: casing
- 26: thermal insulation
- 27: lid
- 28: cryogenic liquid
- 29: cooling device
- 30: exhaust
- 31: vibrating trough
- 32: thread

- L: length of the drum
- D: diameter of the drum
- S: diameter of central shaft 23

## Claims

1. Process for cooling articles (3) such as food, in particular meat, seafood, fruit or vegetables, wherein the articles (3) are cooled within an inner space (5) of a rotatable cylinder (2), the rotatable cylinder (2) comprising a wall (6) made of a flexible material (4) and the articles (3) being enclosed in the inner space (5) at least partially,
**characterized in that**
the flexible material (4) is at least one of fabric, tissue and canvas, in particular woven, preferably made from polyester, polyamide, aromatic polyamide, in particular Nylon, polyurethane and/or polyolefin.

2. Process according to claim 1, **characterized in that** the flexible material (4) is removably fixed to the rotatable cylinder, in particular by means of clamping, hooking and/or clipping.

3. Process according to claim 1 or 2, **characterized in that** the articles (3) are cooled using a cryogenic liquid (28) or a cryogenic solid such as solid carbon dioxide produced by depressurising liquid carbon dioxide.

4. Process according to claim 3, **characterized in that** the flexible material (4) is impregnated with the cryogenic liquid (28) and heat transfer between the articles (3) and the cryogenic liquid (28) within the flexible material (4) is ensured.

5. Process according to one of the preceding claims, **characterized in that** the articles (3) are conveyed along a flow direction (7) in the drum (2) with conveyor means (10), in particular is conveyed along the flow direction (7) using an Archimedean screw (8) and/or a ribbon screw (9).

6. Process according to one of the preceding claims, **characterized in that** the articles (3) are mixed using mixing elements (11).

7. Process according to one of the preceding claims, **characterized in that** the articles (3) are frozen at least partially.

8. Device (1) for cooling articles (3) such as food, in particular meat, seafood, fruit or vegetables, comprising a rotatable cylinder (2) having an inner space (5) for receiving and cooling the articles (3), wherein the rotatable cylinder (2) comprises a wall (6) made of a flexible material (4) and the articles (3) are enclosed in the inner space (5) at least partially,
**characterized in that**
the flexible material (4) is at least one of fabric, tissue and canvas, in particular woven, preferably made from polyester, polyamide, aromatic polyamide, in particular Nylon, polyurethane and/or polyolefin.

9. Device (1) according to claim 8, **characterized in that** the flexible material (4) is the flexible material (4) is removably fixed at the drum (2), in particular by means of screws (19), clips (20) and/or hooks and loops (21) or by clamping.

10. Device (1) according to claim 8 or 9, further comprising a cooling device (29) for cooling the articles (3), in particular supplying means (13) for supplying cryogenic liquid (28), in particular liquid nitrogen, and liquid carbon dioxide for cooling the articles (3).

11. Device (1) according to claim 10, **characterized in that** the flexible material (4) is porous and is impregnatable with the cryogenic liquid (28).

12. Device (1) according to one of the preceding claims 8 to 11, **characterized in that** the wall (6) comprises tubular sections (12), wherein the tubular sections (12) are at least partially made of the flexible material (4).

13. Device (1) according to one of the preceding claims 8 to 12, **characterized in that** the rotatable cylinder (2) comprises in its inner space (5) conveyor means (10) for conveying the articles (3) along a flow direction (7).

14. Device (1) according to claim 13, **characterized in that** conveyor means (10) comprises an Archimedean screw (8) and/or a ribbon screw (9), in particular with an inclination with respect to the horizontal plane in the range of -45° to +45°, preferably in the range of 0° to 6°.

15. Device (1) according to claim 13 or 14, **characterized in that** the conveyor means (10) comprises conveyor elements (14) or mixing elements (11), in particular paddles (15).

16. Device (1) according to one of the preceding claims 8 to 15, **characterized in that** the rotatable cylinder (2) has an inlet port (16) and an outlet port (17) and the inlet port (16) is at least partially immersed in a cooling bath (18).

17. Device (1) according to one of the preceding claims 8 to 16, further comprising at least one of the following features (a1) to (a5):
(a1) The drum (2) has a length (L) ranging from 1 m to 10 m, in particular ranging from 2 m to 6 m;
(a2) the drum (2) has a diameter (D) ranging from 0,4m to 3m, in particular ranging from 0.8 m to 2m;
(a3) the drum (2) has a central shaft (23) extending at least partially over the length (L) or the drum (2) along the axis of rotation (24) of the drum (2), the diameter (S) of the central shaft (23) ranging from 10 % to 70 %, in particular ranging from 30% to 50%, of the diameter (D) of the drum (2);
(a4) the flexible material (4) has pores (22) having average diameters ranging from 0,001 to 5 mm;
(a5) the flexible material (4) has a thickness (F) ranging from 0,5 mm to 5 mm, in particular ranging from 1 mm to 3 mm.

18. Device (1) according to one of the preceding claims 8 to 17, further comprising a casing (25), in particular a casing (25) with a thermal insulation (26), preferably having openable lids (27), around the rotatable cylinder.

## Patentansprüche

1. Verfahren zur Kühlung von Artikeln (3), wie zum Beispiel Lebensmitteln, insbesondere Fleisch, Meeresfrüchten, Früchten und Gemüse, wobei die Artikel (3) in einem Innenraum (5) eines drehbaren Zylinders (2) gekühlt werden, wobei der drehbare Zylinder (2) eine aus einem flexiblen Material (4) hergestellte Wand (6) aufweist und die Artikel (3) zumindest teilweise in dem Innenraum (5) eingeschlossen sind,
**dadurch gekennzeichnet, dass**
das flexible Material (4) Textilstoff und/oder Gewebe und/oder Leinwand, insbesondere gewoben ist und vorzugsweise aus Polyester, Polyamid, aromatischem Polyamid, insbesondere Nylon, Polyurethan und/oder Polyolefin hergestellt ist.

2. Verfahren nach Anspruch 1, **dadurch gekennzeichnet, dass** das flexible Material (4), insbesondere durch Klemmen, Festhaken und/oder Festklammern, lösbar an dem drehbaren Zylinder befestigt ist.

3. Verfahren nach Anspruch 1 oder 2, **dadurch gekennzeichnet, dass** die Artikel (3) unter Verwendung einer kryogenen Flüssigkeit (28) oder eines kryogenen Feststoffes, wie zum Beispiel durch Druckentlastung von flüssigem Kohlendioxid erzeugten festen Kohlendioxids, gekühlt werden.

4. Verfahren nach Anspruch 3, **dadurch gekennzeichnet, dass** das flexible Material (4) mit der kryogenen Flüssigkeit (28) durchtränkt ist und Wärmeübertragung zwischen den Artikeln (3) und der kryogenen Flüssigkeit (28) in dem flexiblen Material (4) gewährleistet wird.

5. Verfahren nach einem der vorhergehenden Ansprüche, **dadurch gekennzeichnet, dass** die Artikel (3) entlang einer Strömungsrichtung (7) in der Trommel (2) mit einem Fördermittel (10) befördert werden und insbesondere unter Verwendung einer archimedischen Schraube (8) und/oder einer Bandschnecke (9) entlang der Strömungsrichtung (7) befördert werden.

6. Verfahren nach einem der vorhergehenden Ansprüche, **dadurch gekennzeichnet, dass** die Artikel (3) unter Verwendung von Mischelementen (11) vermischt werden.

7. Verfahren nach einem der vorhergehenden Ansprüche, **dadurch gekennzeichnet, dass** die Artikel (3) zumindest teilweise gefroren werden.

8. Vorrichtung (1) zur Kühlung von Artikeln (3), wie zum Beispiel Lebensmitteln, insbesondere Fleisch, Meeresfrüchten, Früchten und Gemüse, mit einem drehbaren Zylinder (2), der einen Innenraum (5) zum Aufnehmen und Kühlen der Artikel (3) aufweist, wobei der drehbare Zylinder (2) eine aus einem flexiblen Material (4) hergestellt Wand (6) umfasst und die Artikel (3) zumindest teilweise in dem Innenraum (5) eingeschlossen sind,
**dadurch gekennzeichnet, dass**
das flexible Material (4) Textilstoff und/oder Gewebe und/oder Leinwand, insbesondere gewoben ist und vorzugsweise aus Polyester, Polyamid, aromatischem Polyamid, insbesondere Nylon, Polyurethan und/oder Polyolefin hergestellt ist.

9. Vorrichtung (1) nach Anspruch 8, **dadurch gekennzeichnet, dass** das flexible Material (4) insbesondere durch Schrauben (19), Klammern (20) und/oder Haken und Schlaufen (21) oder durch Klemmen lösbar an der Trommel (2) befestigt ist.

10. Vorrichtung (1) nach Anspruch 8 oder 9, die weiterhin eine Kühlvorrichtung (29) zum Kühlen der Artikel (3), insbesondere Zuführmittel (13) zur Zuführung von kryogener Flüssigkeit (28), insbesondere Flüssigstickstoff, und flüssigem Kohlendioxid zum Kühlen der Artikel (3) umfasst.

11. Vorrichtung (1) nach Anspruch 10, **dadurch gekennzeichnet, dass** das flexible Material (4) porös und mit der kryogenen Flüssigkeit (28) durchtränkbar ist.

12. Vorrichtung (1) nach einem der Ansprüche 8 bis 11, **dadurch gekennzeichnet, dass** die Wand (6) röhrenförmige Abschnitte (12) umfasst, wobei die röhrenförmigen Abschnitte (12) zumindest teilweise aus dem flexiblen Material (4) bestehen.

13. Vorrichtung (1) nach einem der Ansprüche 8 bis 12, **dadurch gekennzeichnet, dass** der drehbare Zylinder (2) in seinem Innenraum (5) ein Fördermittel (10) zum Befördern der Artikel (3) entlang einer Strömungsrichtung (7) umfasst.

14. Vorrichtung (1) nach Anspruch 13, **dadurch gekennzeichnet, dass** das Fördermittel (10) eine archimedische Schraube (8) und/oder eine Bandschnecke (9), insbesondere mit einer Neigung bezüglich der horizontalen Ebene in einem Bereich von -45° bis +45°, vorzugsweise in einem Bereich von 0° bis 6°, umfasst.

15. Vorrichtung (1) nach Anspruch 13 oder 14, **dadurch gekennzeichnet, dass** das Fördermittel (10) Förderelemente (14) oder Mischelemente (11), insbesondere Schaufeln (15) umfasst.

16. Vorrichtung (1) nach einem der vorhergehenden Ansprüche 8 bis 15, **dadurch gekennzeichnet, dass** der drehbare Zylinder (2) eine Einlassöffnung (16) und eine Auslassöffnung (17) aufweist und die Einlassöffnung (16) zumindest teilweise in einem Kühlbad (18) eingetaucht ist.

17. Vorrichtung (1) nach einem der vorhergehenden Ansprüche 8 bis 16, die weiterhin mindestens eines der folgenden Merkmale (a1) bis (a5) umfasst:
(a1) die Trommel (2) weist eine Länge (L) in einem Bereich von 1 m bis 10 m, insbesondere in einem Bereich von 2 m bis 6 m, auf;
(a2) die Trommel (2) weist einen Durchmesser (D) in einem Bereich von 0,4 m bis 3 m, insbesondere in einem Bereich von 0,8 m bis 2 m, auf;
(a3) die Trommel (2) weist eine mittlere Welle (23) auf, die sich zumindest teilweise über die Länge (L) oder die Trommel (2) entlang der Drehachse (24) der Trommel (2) erstreckt, wobei der Durchmesser (S) der mittleren Welle (23) in einem Bereich von 10% bis 70%, insbesondere in einem Bereich von 30% bis 50%, des Durchmessers (D) der Trommel (2) liegt;
(a4) das flexible Material (4) weist Poren (22) mit einem durchschnittlichen Durchmesser in einem Bereich von 0,001 bis 5 mm auf;
(a5) das flexible Material (4) weist eine Dicke (F) in einem Bereich von 0,5 mm bis 5 mm, insbesondere in einem Bereich von 1 mm bis 3 mm, auf.

18. Vorrichtung (1) nach einem der vorhergehenden Ansprüche 8 bis 17, die weiterhin ein Gehäuse (25), insbesondere ein Gehäuse (25) mit einer Wärmeisolierung (26), umfasst, das vorzugsweise Deckel (27), die geöffnet werden können, um den drehbaren Zylinder herum aufweist.

## Revendications

1. Procédé de refroidissement de produits (3) tels que des aliments, en particulier de la viande, des fruits de mer, des fruits ou des légumes, dans lequel les produits (3) sont refroidis dans un espace interne (5) d'un cylindre rotatif (2), le cylindre rotatif (2) comprenant une paroi (6) fabriquée en matière flexible (4) et les produits (3) étant enfermés dans l'espace interne (5) au moins en partie,
**caractérisé en ce que**
la matière flexible (4) est au moins une matière parmi un tissu, une étoffe ou une toile, en particulier tissé(e), de préférence en polyester, polyamide, polyamide aromatique, en particulier en nylon, polyuréthane et/ou polyoléfine.

2. Procédé selon la revendication 1, **caractérisé en ce que** la matière flexible (4) est fixée de manière amovible au cylindre rotatif, en particulier au moyen d'un agrafage, crochetage et/ou pinçage.

3. Procédé selon la revendication 1 ou 2, **caractérisé en ce que** les produits (3) sont refroidis en utilisant un liquide cryogénique (28) ou un solide cryogénique tel que du dioxyde de carbone solide produit en dépressurisant du dioxyde de carbone liquide.

4. Procédé selon la revendication 3, **caractérisé en ce que** la matière flexible (4) est imprégnée du liquide cryogénique (28) et le transfert thermique entre les produits (3) et le liquide cryogénique (28) dans la matière flexible (4) est assuré.

5. Procédé selon l'une des revendications précédentes, **caractérisé en ce que** les produits (3) sont transportés le long d'une direction d'écoulement (7) dans le tambour (2) par un moyen de transport (10), en particulier sont transportés dans la direction d'écoulement (7) en utilisant une vis d'Archimède (8) et/ou une vis à ruban (9).

6. Procédé selon l'une des revendications précédentes, **caractérisé en ce que** les produits (3) sont mélangés en utilisant des éléments de mélange (11).

7. Procédé selon l'une des revendications précédentes, **caractérisé en ce que** les produits (3) sont congelés au moins en partie.

8. Dispositif (1) pour refroidir des produits (3) tels que des aliments, en particulier de la viande, des fruits de mer, des fruits ou des légumes, comprenant un cylindre rotatif (2) ayant un espace interne (5) pour recevoir et refroidir les produits (3), le cylindre rotatif (2) comprenant une paroi (6) fabriquée en une matière flexible (4) et les produits (3) étant enfermés dans l'espace interne (5) au moins en partie,
**caractérisé en ce que**
la matière flexible (4) est au moins une matière parmi un tissu, une étoffe ou une toile, en particulier tissé(e), de préférence en polyester, polyamide, polyamide aromatique, en particulier en nylon, polyuréthane et/ou polyoléfine.

9. Dispositif (1) selon la revendication 8, **caractérisé en ce que** la matière flexible (4) est fixée de manière amovible au tambour (2), en particulier au moyen de vis (19), de pinces (20), et/ou de crochets et de boucles (21) ou par agrafage.

10. Dispositif (1) selon la revendication 8 ou 9, comprenant en outre un dispositif de refroidissement (29) pour refroidir les produits (3), en particulier un moyen d'alimentation (13) pour fournir du liquide cryogénique (28), en particulier de l'azote liquide, et du dioxyde de carbone liquide pour refroidir les produits(3).

11. Dispositif (1) selon la revendication 10, **caractérisé en ce que** la matière flexible (4) est poreuse et peut être imprégnée du liquide cryogénique (28).

12. Dispositif (1) selon l'une des revendications précédentes 8 à 11, **caractérisé en ce que** la paroi (6) comprend des sections tubulaires (12), les sections tubulaires (12) étant au moins en partie fabriquées en matière flexible (4).

13. Dispositif (1) selon l'une des revendications précédentes 8 à 12, **caractérisé en ce que** le cylindre rotatif (2) comprend dans son espace interne (5) un moyen de transport (10) pour transporter les produits (3) dans une direction d'écoulement (7).

14. Dispositif (1) selon la revendication 13, **caractérisé en ce que** le moyen de transport (10) comprend une vis d'Archimède (8) et/ou une vis à ruban (9), en particulier avec une inclinaison par rapport au plan horizontal de l'ordre de -45° à +45°, de préférence de l'ordre de 0° à 6°.

15. Dispositif (1) selon la revendication 13 ou 14, **caractérisé en ce que** le moyen de transport (10) comprend des éléments de transport (14) ou des éléments de mélange (11), en particulier des pales (15).

16. Dispositif (1) selon l'une des revendications précédentes 8 à 15, **caractérisé en ce que** le cylindre rotatif (2) a un orifice d'entrée (16) et un orifice de sortie (17) et l'orifice d'entrée (16) est au moins en partie immergé dans un bain de refroidissement (18).

17. Dispositif (1) selon l'une des revendications précédentes 8 à 16, comprenant en outre au moins l'une des caractéristiques suivantes (a1) à (a5) :
(a1) Le tambour (2) a une longueur (L) de l'ordre de 1 m à 10 m, en particulier de l'ordre de 2 m à 6 m ;
(a2) le tambour (2) a un diamètre (D) de l'ordre de 0,4 m à 3 m, en particulier de l'ordre de 0,8 m à 2 m ;
(a3) le tambour (2) a une tige centrale (23) s'étendant au moins en partie sur la longueur (L) du tambour (2) le long de l'axe de rotation (24) du tambour (2), le diamètre (S) de la tige centrale (23) étant de l'ordre de 10% à 70%, en particulier de l'ordre de 30% à 50% du diamètre (D) du tambour (2) ;
(a4) la matière flexible (4) a des pores (22) ayant des diamètres moyens de l'ordre de 0,001 à 5 mm ;
(a5) la matière flexible (4) a une épaisseur (F) de l'ordre de 0,5 mm à 5 mm, en particulier de l'ordre de 1 mm à 3 mm.

18. Dispositif (1) selon l'une des revendications précédentes 8 à 17, comprenant en outre une enceinte (25), en particulier une enceinte (25) avec une isolation thermique (26), de préférence ayant des couvercles ouvrables (27), autour du cylindre rotatif.
